(19) **Europäisches Patentamt European Patent Office Office européen des brevets**

(11) **EP 4 675 538 A1**

(12) **EUROPEAN PATENT APPLICATION**

(43) Date of publication:
07.01.2026 Bulletin 2026/02

(21) Application number: 24465543.7

(22) Date of filing: 02.07.2024

(51) International Patent Classification (IPC):
*G06Q 30/018* (2023.01)

(52) Cooperative Patent Classification (CPC):
G06Q 30/018

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Siemens Aktiengesellschaft
80333 München (DE)

(72) Inventors:
• LEONTE, Ionut Alexandru
022174 Bucharest (RO)

• SHAMS, Saad Bin
81549 Munchen (DE)
• KASINATHAN, Prabhakaran
81549 Munchen (DE)
• SELTZSAM, Stefan
85653 Aying (DE)

(74) Representative: Fierascu, Cosmina-Catrinel
Rominvent SA
35 Ermil Pangratti Street
Sector 1
011882 Bucharest (RO)

(54) **DETERMINING TRUSTWORTHINESS OF A CARBON FOOTPRINT DETERMINATION**

(57)     A method (300) for determining a trustworthiness of a carbon footprint determination of a product (110) is proposed, wherein the method (300) comprises steps of: determining (310) components (130) that are required for manufacturing the product (110); for each component (130), determining (310) an amount of said component (130) in the product (110); determining (310) carbon footprint information for each of the components (130), wherein each carbon footprint information is certified by an associated certifier (125). For each of those certifiers (125), components (130) for which the certifier (125) has certified carbon footprint information and a sum of amounts of said components (130) in the product (110) are determined (325). A trustworthiness for each certifier (125) is then determined; and the trustworthiness of the carbon footprint determination is finally determined (345) as a weighted arithmetic mean over trustworthinesses for each certifier (125) and associated sums.

FIG 1

EP 4 675 538 A1

**Description**

Present invention relates to carbon footprint determination for a product. More specifically, the invention relates to determining how trustworthy such a determination can be.

A product which can be traded on standard markets is made out of components, each of which may be made out of other components. The carbon footprint of a component may be determined on the basis of several parameters that relate to how much $CO_2$ is shed into the atmosphere by the product. Each component has a certain carbon footprint which reflects an amount or equivalent of $CO_2$ that is required for providing said component. In order to determine the carbon footprint of the product, footprints of its components must be determined.

Carbon footprint information which permits determination of an absolute $CO_2$ contribution of a component to a product may be determined through experiments, statistical data or otherwise. In order to make such information verifiable a certificate may be created by a certifier. The certifier may check if assumptions or recommended processes that the footprint information relies on are actually kept before the certificate is issued. A manufacturer of a component may present the certificate - or a subset of information from it - to an interested party such as to permit carbon foot determination. The determination is to be trusted as long as the certifier enjoys trustworthiness.

However, this method may yield confidential supply chain information such as which rarely traded component is bought from which supplier. Also, metadata on certificate requests may be used to identify a party of interest in an otherwise anonymous process. It is an object of present invention to provide an improved technique for determining the trustworthiness of a carbon footprint determination of a product, preferably keeping confidentiality of a supply chain of each component. The invention solves this problem with subject matter of enclosed independent claims. Subclaims give preferred embodiments.

A method for determining a trustworthiness of a carbon footprint determination of a product is proposed, wherein the method comprises steps of: determining components that are required for manufacturing the product; for each component, determining an amount of said component in the product; determining carbon footprint information for each of the components, wherein each carbon footprint information is certified by an associated certifier. For each of those certifiers, components for which the certifier has certified carbon footprint information and a sum of amounts of said components in the product are determined. A trustworthiness for each certifier is then determined; and the trustworthiness of the carbon footprint determination is finally determined as a weighted arithmetic mean over trustworthinesses for each certifier and associated sums.

The trustworthiness of the carbon footprint determination can finally be determined as a weighted arithmetic mean over trustworthiness, here the plural of trustworthiness is meant in particular, for each certifier and associated sums. As a trustworthiness for each certifier is determined, a plurality of trustworthiness (values) can be determined. The carbon footprint determination can be determined as a weighted arithmetic mean over the plurality of trustworthiness (values) for each certifier and associated sums.

Not all certifiers are equally solicitous in making sure the information they certify is actually correct. A potential customer for said product may therefore object to an element of the carbon footprint determination. As the inventors have realized, trusting or not trusting a certifier is generally non-binary and also is subject to the customer's own information, experience or feelings. Present method allows said customer to determine trustworthiness of said determination based on his own assumptions on trustworthiness of involved certifiers.

It is to be noted that the trustworthinesses for the certifiers may be supplied by the potential customer or a user of the proposed method. A trustworthiness may be a subjective value, based on whatever metrics said user choses. A potential customer for the product may be required to trust or mistrust a predetermined certifier due to external reasons like contract information or governmental requirements. Herein, a trustworthiness is assumed to have a numeric value, and it is furthermore assumed that all trustworthinesses are given on the same scale.

A trustworthiness for a certifier may be expressed on a scale of choice of the user or customer, say in a range between 0 and 100. The trustworthiness of the carbon footprint determination can then be determined as a mean of trustworthinesses for each certifier, wherein each trustworthiness is weighted by the associated sum. The determined trustworthiness will be on the same scale as the trustworthiness of the certifier. In a business context, a user, possibly a buyer or trader for said product, may produce his chosen levels of trust for the involved certifiers and the overall level of trust may be determined for him. There may be a predetermined level of trust for a certifier, in different scenarios as a default value, a legal obligation or a technical parameter. The customer may accept such a level of trust in a standard determination but chose to amend it according to special circumstances.

Carbon footprint information for a component may be determined by a producer of the component and the determination may be certified by the certifier. There may exist a database for looking up producers for components. In order to determine carbon footprint information for a component, a producer may be asked to provide said information in a certified form. The producer may be free to share additional information like properties of the component.

The sum of amounts of components certified by one certifier yields a weight of the certifier in the carbon footprint determination. The larger the contribution of a component is to the product, the more relevant is the certifier associated with that component. Hence, the larger the sum of the components in the product is for one associated certifier, the greater his weight is in the determination of the trustworthiness. Should the components a certifier certified information for represent only a little contribution in the overall carbon footprint, a trustworthiness or level of trust (LOT) for this certifier may not influence greatly how trustworthy the overall carbon footprint determination is.

Present method may use a linear equation that can be easily filled with levels of trust for the certifiers so that the overall trustworthiness can be determined with very little effort. In one embodiment, the equation is provided to a user and the user can fill in levels of trust for the certifiers and determine overall trustworthiness of the carbon footprint determination with a simple calculation. The method may help finding out whether the product fulfills given expectations with view to credibility of a carbon footprint determination. In this, the method may not allow deduction of confidential information e.g. concerning a supply chain of a component. A supplier of a component may thus participate in said method without having to fear disclosure of business relationships with another supplier.

In one embodiment of present invention, the carbon footprint is determined as trustworthy if the trustworthiness of the footprint determination exceeds a predetermined threshold. Such threshold may be a legal or governmental requirement or be chosen by the customer.

A carbon footprint of the product can be determined on the basis of amounts of the determined components in the product and associated carbon footprint information for the components. For this, absolute amounts of the components inside the product may be determined. Based on an absolute amount of the product (say, in pieces, mass or volume) and amounts of the components in the product, an absolute amount of CO2 for the chosen amount can be easily deduced.

Determination of the sums of amounts of components in the product per certifier may be done confidentially. Carbon footprint information may be deposited on some kind of platform to which suppliers and other entities may be invited. The described determination may be performed on the platform's side, without the enquirer getting more detailed information than said sums of amounts of carbon footprint contribution per certifier. A supplier who wishes to share more information may do so using a different mechanism, possibly outside the platform.

A carbon footprint information may be provided in a cryptographically verifiable format. Such information may follow established cryptographic principles, for instance a public / private key infrastructure which can be used for issuing and verifying certificates.

A component may generally comprise an intermediate good, a substance, an amount of energy, a process or another requirement for providing said component. Carbon footprint information may relate to actual, effective or analogous CO2 cost. The information may for instance take a recycling effort of the component or product into account.

According to another preferred embodiment of present invention, further determination of carbon footprint contribution of components can be skipped if an amount of a component in the product lies under a predetermined threshold. A supply chain for a component for said product may be followed only so far that the carbon footprint contribution to the product is too small to elaborate any further. Said threshold may be chosen so that no matter how low a trustworthiness for carbon footprint information is, its weight for determining the total carbon footprint will be acceptable. For instance, should a component account for 0.3% of the carbon footprint of a product, it may not be worthwhile to further elaborate which part of said contribution enjoys which level of trust. Instead, a default level of trust may be used for this share. The default value may be equivalent to a lowest anticipated value or even a lowest possible value.

According to yet another embodiment of present invention it is determined that a component has carbon footprint information certified by more than one certifier; and alternative sets of sums of amounts are provided for the certifiers. In other words, should there be a choice of certificates for some component, different sets of determinations may be done. Effectively, a customer may thus select the set of determination that best suits his requirements. This may allow one supplier to provide different certificates for carbon footprint information for different markets or different customers. For instance, two competing customers could have an inverse assessment as to the trustworthiness of two certifiers, possibly based on the country the customer and the certifier resides in. By providing to certificates, each customer may arrive at the conclusion that the overall carbon footprint determination of said component is acceptable. In this, both customers may use different levels of trust for the certifiers and different sets of output from the method proposed herein.

According to another aspect of present invention, a system for determining trustworthiness of a carbon footprint determination is proposed. The system comprises a processing unit with access to a registry with verifiable carbon footprint information for components. The processing unit is adapted to determine, for a given product, components which are required for manufacturing said product; for each component, to determine an amount of said component in the product; to determine carbon footprint information for each of the components, wherein each carbon footprint information is certified by an associated certifier; for each certifier, to determine components for which the certifier has certified carbon footprint information; to determine a sum of amounts of said components in the product; to determine trustworthinesses for the certifiers; and to determine the trustworthiness of the carbon footprint determination as a weighted arithmetic mean over trustworthinesses for each certifier and associated sums.

The processing unit may be adapted to carry out, completely or in part, a method disclosed herein. The processing means may be of electronic nature and comprise a micro computer or micro controller, an ASIC or a similar device. The method may be realized as a computer program product with program code means and may be stored on a computer readable media. Features or advantages of the method may be transferred to a corresponding device or system as well as vice versa.

In one embodiment, the processing unit is also adapted to determine a total carbon footprint of the product. The processing unit may furthermore be adapted to determine, on the basis of chosen trustworthiness of said certifiers, a trustworthiness of the determined carbon footprint. According to one embodiment, an inquirer such as a user, a (potential) customer or a (potential) dealer of said product may provide preferred trustworthinesses for predetermined certifiers and the determination of trustworthiness of the overall carbon footprint determination may be carried out on the system covertly. That is, said inquirer may not be informed on the determined sums of amounts. In other words, the inquirer will not know which certifier had which weight in the determination. This may make it harder to manipulate levels of trust such that the trustworthiness of the carbon footprint determination reaches a certain level.

The invention will now be discussed in more detail with reference to the enclosed drawings in which:

Figure 1      shows a diagram of a system;
Figure 2      shows relationships between suppliers in a supply chain;
Figure 3      shows a flow diagram of a first method; and
Figure 4      shows a flow diagram of a second method.

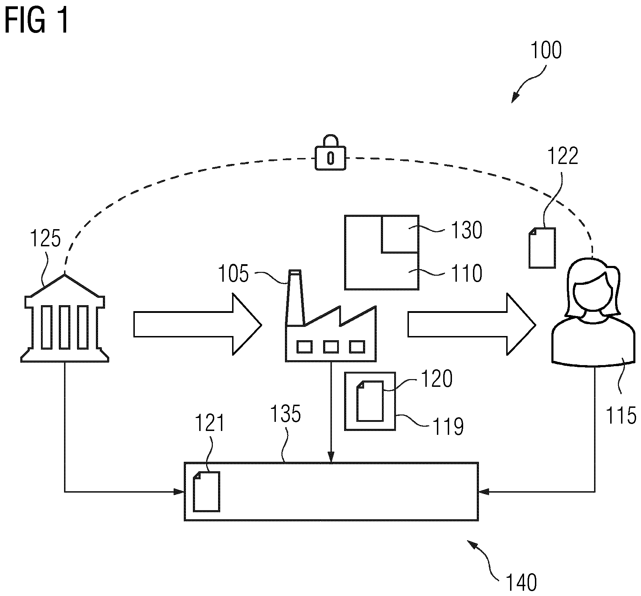

Figure 1 shows a diagram of a system 100. A producer, manufacturer or other kind of supplier 105 provides a product 110. A consumer 115 or other kind of person may be interested in trading, buying, processing or otherwise handling the product 110 and thus inquire about the carbon footprint associated with the product 110.

For determining said carbon footprint, the supplier 105 determines carbon footprint information 120 which specifies details on components contained therein and their amounts in said product. The information 120 is verified and certified by a certifier 125. A certification process may or may not comprise verification of information provided by the supplier 105 and regular checks to make sure the certified information is not outdated. Cryptographic methods may be employed to make sure the information is not changed after the certifier has certified it. Using those cryptographic methods, the consumer 115 may check validity of some given carbon footprint information 120.

Typically, a product 110 comprises one or more components 130 which the supplier 105 may obtain from another supplier. Each component 130 may be assigned some carbon footprint information in the form of a verifiable presentation (VP) 122. Knowing all components 130 of a product and what quantity of each component 130 is required for the product 110, a carbon footprint of the product 110 can be determined. For instance, an electric engine as a product 110 may comprise a housing, copper wire and bearings as components 130. A bearing may comprise inner and outer barrel bands, a set of steel balls and plastic covers as components 130. The list can be expanded to components 130 for these components and so on. A component 130 may comprise a physical thing, a service, an amount of energy or anything else that is required for manufacturing or otherwise producing or providing said component 130. Depending on the perspective, a component 130 of a product 110 can thus be seen as a product 110 of its own right. Conversely, a product 110 may serve as component 130 in another product 110.

In order to determine a carbon footprint of a product 110, its components 130, their amounts in the product 110 and carbon footprint information 122 must be known. Carbon footprint information 122 on a component 130 or product 110 may be kept in a storage 119 which is typically secured so that only the supplier 150 can access stored data. The storage 119 can come in the form of a digital wallet which can be realized for example as an online processing system, a server or a service, possibly in a cloud. A consumer 115 may query the supplier 115 for carbon footprint information 122 for a product 110 and the supplier 115 may share corresponding VP information 122 with the customer 115. The supplier 115 may be free to share additional information on the component 130 or product 110. Cryptographic methods may be employed to make sure VP information 122 is not changed after the certifier 125 has certified it. Using those cryptographic methods, the consumer 115 may check validity of a given carbon footprint information 122 by verifying its signatures against a corresponding entry in the public registry 121.

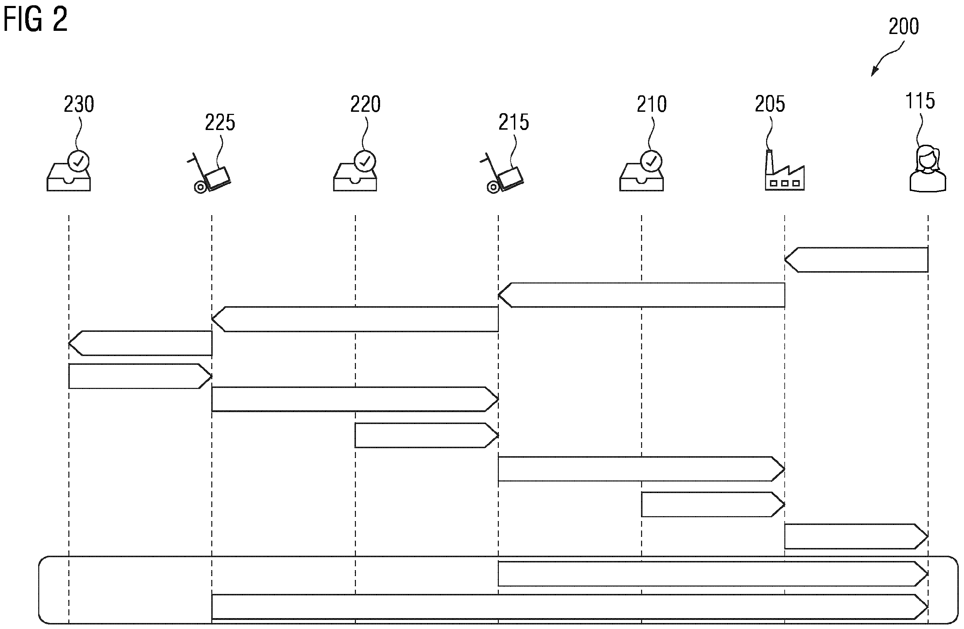

Figure 2 shows a supply chain 200 with exemplary relationships between suppliers 105. The same figure outlines a method for determining a carbon footprint of a product 110. A customer 115 may request carbon footprint information 122 concerning a product 110 from a first supplier 205 of the product 110.

In present example, a contribution in terms of carbon footprint of the first supplier 205 to the product 110 is certified by a first certifier 210. The product 110 comprises a component 130 which is provided by a second supplier 215, wherein the carbon footprint 122 of said component 130 is certified by a second certifier 220. Similarly, a component 130 the second supplier 215 obtains from a third supplier 225 for bringing forth his component 130 has carbon footprint information 122 that is certified by a third certifier 230. In this, each supplier 205, 215, 225 may be a supplier 105 in the system of figure 1 and each certifier 210, 220, 230 may be a certifier 125 there.

At each step when a supplier 205, 215, 225 is requesting certification of carbon footprint 122 from a certifier 210, 220, 230, the supplier 205, 215, 225 can specify what attributes will be certified, for example quality or physical information as well as the carbon footprint value of his product 110, which will include carbon footprint of components 130. At each step when a supplier 205, 215, 225 is presenting carbon footprint information 122 to a requester 115, 205, 215, 225 it can select attributes from available attributes in the certified information that he wishes to share with the requester 115, 205, 215, 225. Such attributes may for example comprise the carbon footprint value 122 of his product 110, including aggregated data from comprised components 130, and a calculated weighted list of certifiers based on the carbon footprint calculated. Optionally, a supplier 205, 215, 225 may anonymously provide information to the consumer 115 as indicated in a bottom region of figure 2.

A carbon footprint of a product 105 can be determined on the basis of amounts of components 130 (and their components 130) and corresponding carbon footprint information 130. However, this scheme relies on absolute trustworthiness of all involved certifiers 210, 220, 230. Present invention sets out to provide a combined value for trustworthiness of a carbon footprint determination based on individual and possibly subjective values for trustworthiness of the different certifiers 210, 220, 230.

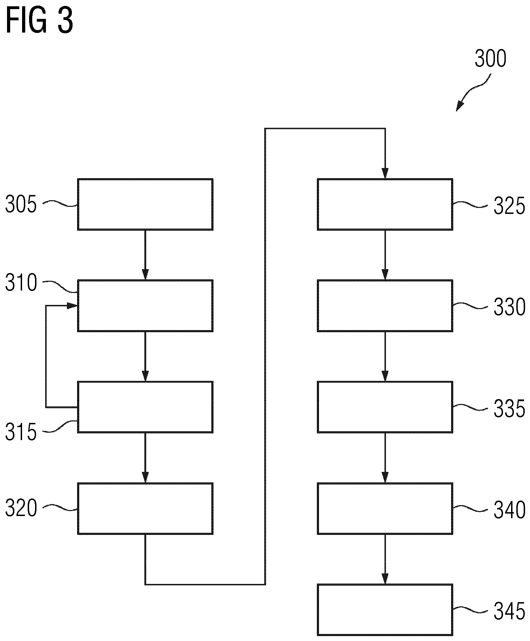

Figure 3 shows a flow diagram of a first method 300. The method 300 may be carried out on a processing system 140 which has access to a registry 135 and a certified sets of carbon footprint information 122.

In a step 305 a product 110 in question may be determined. Also, an amount of interest of the product 110 will be determined, usually in pieces, a mass, a volume or any other suitable metric. In a step 310 components 130 of said product 110 are determined. For each component 130 a amount that is required for coming forth with the product 110 is determined. Also, carbon footprint information 110 is determined for each component 130 by requesting a presentation 122 from a supplier.

The retrieved information 122 for each component 130 will cover a carbon footprint contribution of one or more subcomponents 130 so that a total amount of carbon footprint of that component 130 is given. The information 122 may also contain a weighted list of certifiers 125 involved in certification of a sub-subcomponent 130. In a step 315, the weight of the carbon footprint of own emissions signed by the certifier 125 of the component 130 and the weights of carbon footprints of sub-subcomponents 130 signed by certifiers 125 of those sub-subcomponents 130 may be determined from the obtained information 122.

For each component 130 in a supply chain, steps 310, 315 may be carried out independently. Effectively, a recursive determination of carbon footprint contribution to a component 130 may thus be determined for every level in the supply chain (cf. Figure 2). Throughout the process, only weight information is shared along the supply chain so that no information about the identity of a supplier or a bill of material for the product 110 can be induced by the requestor.

Each set of carbon footprint information 122 is certified by an associated certifier 125. In a step 320, the collected information is sorted by certifiers 125. For each certifier 125, sums of components 130 are summed up in a step 325. A sum is built over amounts of carbon footprint of components 130 in the product 105 in which said certifier 125 signed the corresponding carbon footprint information 110. The determined sums for all of the certifiers 125 should essentially add up to 100 %.

In a step 330, the absolute carbon footprint of the product 110 can be determined. This can be done in a known fashion by determining and adding up absolute CO2 contributions of the components 130 to the product 105. A contribution of a component 130 may be multiplied by an absolute amount of the product 110.

In a step 335, a weighted sum for determining trustworthiness of the carbon footprint determined in step 330 can be produced. As described, a value for trustworthiness of the footprint may be determined on the basis of values for trustworthinesses for certifiers 125 who certified carbon footprint information 122 used in the determination. In one exemplary embodiment a linear equation may be given such as:

$$trust = t1 * Wcert\_1 + \ldots + tn * Wcert\_n$$

Where *trust* is the overall trustworthiness of the determined carbon footprint, t is a trustworthiness assigned to a certifier 125 and Wcert is a weight of a certifier 125 in the determination. Trust levels t may be chosen by an inquirer or default values may be used. Values for Wcert are determined by present method 300.

Another way to express the determination of Wcert is this:

$$WCert\_i = \sum\_i = 1 \, .. n \, ( \sum\_j = 1 \, .. m \, ( WCert\_iComp\_j * ( ( Q\_j * TPCF\_j ) / TPCF ) ) ) \%$$

Where:

WCert_i is the resulting weight of a specific certifier i. This value is added in the list of weights of the current product.

WCert_iComp_j is the weight of certifier i for the component j. This value is extracted from the carbon footprint information 122 that contains the list of weights of component j.

Qj is the quantity used of component j in the manufacturing of the current product.

TPCF_j is the total PCF of component j extracted from the carbon footprint information 122 of component j.

TPCF is the total PCF of the current product.

$( ( Q\_j * TPCF\_j ) / TPCF )$ is the contribution of component j in the total PCF (product carbon footprint) of the product 110.

$WCert\_iComp\_j * ( ( Qj * TPCFj)/TPCF )$ is the normalized weight of Certifier i for component j.

In a step 340 trustworthiness for the certifiers 125 may be collected or a user entry may be detected. It is important to notice that trustworthiness for the certifiers 125 may come from any source, including a subjective assessment of a user or inquirer.

In a successive step 345, the actual trustworthiness of the determined carbon footprint may be determined. This step determination relies heavily on the levels of trust assigned to the certifiers 125 in the previous step 340. For a given product 105, the same carbon footprint will be determined but the trustworthiness of the determination may be different for different users.

The following example illustrates this point.

| certifier | weight | level of trust by customer 1 | resulting trust customer 1 | level of trust by customer 2 | resulting trust customer 2 |
|---|---|---|---|---|---|
| A | 10 % | 15 | 1.5 | 15 | 1.5 |
| B | 80 % | 90 | 72 | 60 | 48 |
| C | 10 % | 90 | 9 | 80 | 8 |
| overall LOT | | | 82.5 | | 67.5 |

Exemplary customers 1 and 2 rate certifiers A, B and C differently. Trustworthinesses assigned to the certifiers 115 are given on an exemplary scale between 0 and 100. A determined overall LOT (level of trust) is therefore given on the same scale. A minimum LOT of 0 can be achieved if each certifier 115 is assigned a trustworthiness of 0 and a maximum LOT requires trustworthinesses of 100 for each of the certifiers 115.

A customer 115 may compare the overall LOT with a predetermined threshold and reject the carbon footprint determination if the determined overall LOT is lower than the threshold. In above example, both customers might use a threshold of 70. While customer 1 would find the determined overall trustworthiness of the determination acceptable, customer 2 would reject it and possibly decide not to use the product 110.

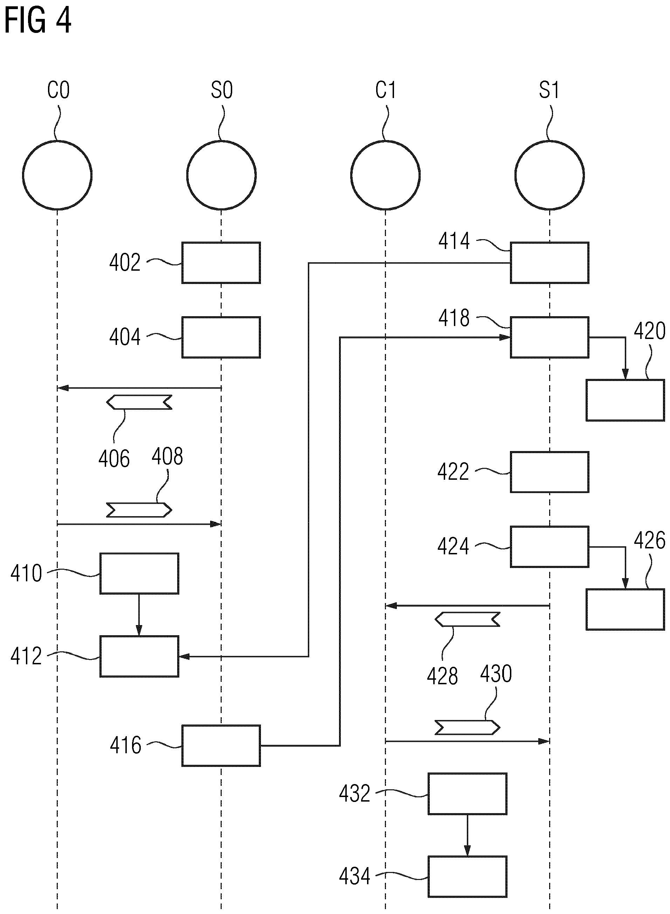

Figure 4 shows a flow chart of another method 400 which exemplifies the request-and-answer steps 310, 315 in method 300. The shown example starts from certifiers C0, C1 and suppliers S0, S1. Supplier S1 has a product P1 and supplier S0 has a product P0. Supplier S1 to manufacture P1 uses the product P0 in his manufacturing process. From the point of view of S1, P0 is a component of P1, that is C1P0.

According to a known technique for sharing and validating carbon footprint information, a certifier 115 issues a Verifiable Credential (VC) 120 to the holder (in our case can be either a supplier or a manufacturer) and the holder presents a Verifiable Presentation (VP) 122 to a customer (that can be another manufacturer or supplier or a final customer) who can cryptographically verify that the attributes insides the VP (for example the product carbon footprint (PCF) value) are correct and certified by the issuer. The VP corresponds to carbon footprint information 120.

In a step 402, S0 calculates the PCF for product P0. In a step 404, S0 creates a weighted list of certifiers for P0. Supplier S0 then may request a VC 122 from C0 in a step 406 and receive the sought verifiable credential (VC) 122 in a step 408. The VC for product P0 may comprise product data, the total PCF and a list of weighted certifiers, as indicated in item 410. In present example, the list 412 of certifiers contains just one entry which is C0 with a amount of 100%.

In a step 414, S1 requests VP 122 for components of product P1, which is in present example P0. The request goes to S0 who answers in a step 416 and sends VP 122 to supplier P1. The VP 418 of P0 contains the PCF and the list of weighted certifiers as indicated in item 418. The list of weighted certifiers has C0 as only entry, with a contribution of 100% as shown in item 420.

In a step 422 S1 calculates the PCF for product P1. The it creates a weighted list of certifiers for P1 in a step 424. An exemplary list is given in item 426 and contains the following information:

| C1 | own emissions / TPCF1 % |
|---|---|

(continued)

| C2 | WCOPO * (Q0 * TPCF0/TPCF1) % |
|----|------------------------------|

wherein:

- WCOPO is the weight of certifier C0 from the weight list of P0
- Q0 is the quantity of P0 used in manufacturing P1
- TPCF0 is the total PDF of P0
- TPCF1 is the total PCF of P1.

If there are multiple components that have the same certifier then the weight for each component is aggregated into the list entry for that certifier.

In a step 428, S1 requests a VC 120 from C1 and C1 answers the request in a step 430. The VC 432 for P1 comprises product data, a total PCF and a list 436 of weighted certifiers. The list 434 comprises information corresponding to item 426.

Throughout present writing, independent of the grammatical term usage, individuals with male, female or other gender identities are included within the term.

List of Reference Numerals as Part of the Description

| | |
|-----|-----|
| 100 | system |
| 105 | supplier |
| 110 | product |
| 115 | consumer |
| 119 | wallet |
| 120 | verifiable credential, VC |
| 121 | metadata |
| 122 | verifiable presentation, VP |
| 125 | certifier |
| 130 | component |
| 135 | registry |
| 140 | processing system |

| | |
|-----|-----|
| 200 | supply chain |
| 205 | first supplier |
| 210 | first certifier |
| 215 | second supplier |
| 220 | second certifier |
| 225 | third supplier |
| 230 | third certifier |

| | |
|-----|-----|
| 300 | method |
| 305 | determine product and amount |
| 310 | determine components, amounts, carbon footprint information and certifier |
| 315 | determine weights of subcomponents in carbon footprint |
| 320 | sort carbon collected information by certifiers |
| 325 | sum up amounts of carbon footprint of a component in the product |
| 330 | determine carbon footprint |
| 335 | provide weighted sum for trustworthiness of determination |
| 340 | determine trustworthiness of certifiers |
| 345 | determine trustworthiness of determined carbon footprint |

| | |
|-----|-----|
| 400 | method |
| 402 | calculate PCF for P0 |
| 404 | create weighted list of certifiers of P0 |

406     request VC
408     receive VC
410     VC P0
412     list of weighted certifiers
414     request VP for components of P1
416     send VP to S1
418     VP of P0
420     list of weighted certifiers
422     calculate PCV for P1
424     create weighted list of certifiers for P1
426     list of weighted certifiers
428     request VC
430     receive VC
432     VC P1
434     list of weighted certifiers

**Claims**

1.  Method (300) for determining a trustworthiness of a carbon footprint determination of a product (110), wherein the method (300) comprises steps of:

    - determining (310) components (130) that are required for manufacturing the product (110);
    - for each component (130), determining (310) an amount of said component (130) in the product (110);
    - determining (310) carbon footprint information for each of the components (130);
    - each carbon footprint information being certified by an associated certifier (125);
    - for each certifier (125),

        - determining (325) components (130) for which the certifier (125) has certified carbon footprint information,
        - and a sum of amounts of said components (130) in the product (110);

    - determining a trustworthiness for each certifier (125); and
    - determining (345) the trustworthiness of the carbon footprint determination as a weighted arithmetic mean over trustworthinesses for each certifier (125) and associated sums.

2.  Method (300) according to claim 1, wherein the carbon footprint is determined as trustworthy if the trustworthiness of the footprint determination exceeds a predetermined threshold.

3.  Method (300) according to claim 1 or 2, further comprising a step of determining (330) a carbon footprint the product (110) on the basis of amounts of the determined components (130) in the product (110) and associated carbon footprint information for the components (130).

4.  Method (300) according to one of the above claims, wherein determination (325) of the sums of amounts of components (130) in the product (110) per certifier (125) is done confidentially.

5.  Method (300) according to one of the above claims, wherein a carbon footprint information is provided in a cryptographically verifiable format.

6.  Method (300) according to one of the above claims, wherein a component (130) may comprise an intermediate good, a substance, an amount of energy, a process or another requirement for providing said component (130).

7.  Method (300) according to one of the above claims, wherein determination (310) is skipped if a amount of a component (130) in the product (110) lies under a predetermined threshold.

8.  Method (300) according to one of the above claims, wherein it is determined that a component (130) has carbon footprint information certified by more than one certifier (125); and alternative sets of sums of amounts are provided for the certifiers (125).

9.  System (140) for determining trustworthiness of a carbon footprint determination, the system comprising a processing unit with access to a registry with verifiable carbon footprint information for components (130); wherein the processing unit is adapted to determine, for a given product (110), components (130) which are required for manufacturing said product (110); for each component (130), to determine an amount of said component (130) in the product (110); to determine carbon footprint information for each of the components (130), wherein each carbon footprint information is certified by an associated certifier (125); for each certifier (125), to determine components (130) for which the certifier (125) has certified carbon footprint information; to determine a sum of amounts of said components (130) in the product (110); to determine trustworthinesses for the certifiers; and to determine the trustworthiness of the carbon footprint determination as a weighted arithmetic mean over trustworthinesses for each certifier (125) and associated sums.

10. System (140) according to claim 9, wherein the system (140) is adapted to determine a total carbon footprint of the product (110).

11. Computer program product, which performs the steps of a method (300) according to claims 1 to 8, if the computer program is executed on a computer.

12. Computer readable medium, on which a computer program product according to claim 11 is stored.

FIG 1

EP 4 675 538 A1

FIG 2

# FIG 3

300

305

310

315

320

325

330

335

340

345

# FIG 4

**EUROPEAN SEARCH REPORT**

Application Number

EP 24 46 5543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/284446 A1 (KIND ANDREAS [DE] ET AL) 8 September 2022 (2022-09-08) * paragraph [0006] * * paragraph [0014] * * paragraph [0026] - paragraph [0027] * * paragraph [0031] - paragraph [0032] * * paragraph [0034] * * paragraph [0036] - paragraph [0037] * * paragraph [0040] * * paragraph [0041] * * paragraph [0068] * ----- | 1-12 | INV. G06Q30/018 |
| X | US 2022/327538 A1 (KUMAR VENKI [US] ET AL) 13 October 2022 (2022-10-13) * the whole document * ----- | 1-12 | |

TECHNICAL FIELDS SEARCHED (IPC)

G06Q

The present search report has been drawn up for all claims

| Place of search | Date of completion of the search | Examiner |
|---|---|---|
| The Hague | 22 September 2024 | Papanikolaou, N |

EPO FORM 1503 03.82 (P04C01)

## ANNEX TO THE EUROPEAN SEARCH REPORT
## ON EUROPEAN PATENT APPLICATION NO.

EP 24 46 5543

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2024

| Patent document cited in search report | Publication date | Patent family member(s) | Publication date |
|---|---|---|---|
| US 2022284446 A1 | 08-09-2022 | CN 115033865 A | 09-09-2022 |
| | | EP 4054116 A1 | 07-09-2022 |
| | | JP 7516441 B2 | 16-07-2024 |
| | | JP 2022135984 A | 15-09-2022 |
| | | KR 20220128482 A | 20-09-2022 |
| | | US 2022284446 A1 | 08-09-2022 |
| US 2022327538 A1 | 13-10-2022 | NONE | |

EPO FORM P0459

For more details about this annex : see Official Journal of the European Patent Office, No. 12/82